# EUROPÄISCHE PATENTANMELDUNG

(11) **EP 4 592 011 A1**
(43) Veröffentlichungstag der Anmeldung: **30.07.2025**
(21) Anmeldenummer: 24154040.0
(22) Anmeldetag: 25.01.2024
(51) Int. Cl.: B23F 23/12, G01M 13/021, G05B 19/18, G05B 19/4065, G01M 13/028

(54) **ANALYSE VERZAHNPROZESS MITTELS WÄLZPRÜFUNG**

(71) Anmelder: Klingelnberg AG, 8050 Zürich (CH)
(72) Erfinder: Landvogt, Alexander, 35519 Rockenberg (DE)
(74) Vertreter: Janke Scholl Patentanwälte PartG mbB

(57) **Zusammenfassung**

Verfahren, mit den Verfahrensschritten: Bearbeitung einer Verzahnung (17) eines Bauteils (16) mittels einer Verzahn-maschine (2), wobei während der Bearbeitung der Verzahnung (17) Achsdaten (22, 26) mindestens einer Maschinenachse (4, 6) der Verzahn-maschine (2), wie ein Achsvorschub, eine Achsbeschleunigung, eine Leistungsaufnahme eines Achsantriebs oder dergleichen, erfasst werden und/oder wobei während der Bearbeitung der Verzahnung (17) Sensordaten (18) mindestens eines Sensors (10) der Verzahnmaschine (2), wie eines Körperschallsensors, eines Beschleunigungssensors, eines Abstandssensors oder dergleichen, erfasst werden; Bereitstellen der erfassten Achsdaten (22, 26) bezogen auf eine Umdrehung des Bauteils (16) als umdrehungsbezogene Achsdaten und/oder Bereitstellen der erfassten Sensordaten (18) bezogen auf eine Umdrehung des Bauteils (16) als umdrehungsbezogene Sensordaten; Wälzprüfung des verzahnten Bauteils (16) mittels eines Wälzprüfstands (3, 5), wobei Messdaten der Wälzprüfung bezogen auf eine Umdrehung des Bauteils (16) während der Wälzprüfung als umdrehungsbezogene Messdaten bereitgestellt werden; Abgleich der umdrehungsbezogenen Achsdaten (22, 26) und/oder der umdrehungsbezogenen Sensordaten (18) mit den umdrehungsbezogenen Messdaten der Wälzprüfung, um Korrelationen zwischen Verzahnungsabweichungen gemäß der umdrehungsbezogenen Messdaten der Wälzprüfung und Maschinenabweichungen gemäß der umdrehungsbezogenen Achsdaten und/oder der umdrehungsbezogenen Sensordaten zu bestimmen.

## Beschreibung

Die vorliegende Erfindung betrifft ein Verfahren, mit den Verfahrensschritten: Bearbeitung einer Verzahnung eines Bauteils mittels einer Verzahnmaschine und Wälzprüfung des verzahnten Bauteils mittels eines Wälzprüfstands.

Aufgrund der immer weiter steigenden Anforderungen an die Qualität von Verzahnungen und insbesondere deren Geräuschverhalten, werden in der industriellen Serienfertigung bis zu 100 % aller gefertigten Verzahnungen einer Wälzprüfung auf einem Wälzprüfstand unterzogen. Hierbei können unter anderem periodische Abweichungen, die sich negativ auf das Geräuschverhalten einer Verzahnung auswirken, ermittelt werden.

Weiter ist es bekannt, während der Bearbeitung einer Verzahnung Achsdaten oder Sensordaten der betreffenden Verzahnmaschine aufzuzeichnen, um die Maschinenfunktionen, die Maschinenkomponenten und den Fertigungsprozess an sich zu überwachen. Derartige Daten der Werkzeugmaschine werden meist als Weg- oder Zeitsignale erfasst.

Abweichungen, z.B. der Achsen oder Antriebe bzw. der Kinematik der Verzahnmaschine, spiegeln sich ggf. in den Ergebnissen der Wälzprüfung wider, da die Abweichungen zum Teil auf die Geometrie der gefertigten Verzahnung übertragen werden. Die Ergebnisse einer Wälzprüfung werden üblicherweise bezogen auf die Bauteilumdrehung während der Wälzprüfung erfasst. Ergebnisse der Wälzprüfung sind nicht unmittelbar mit den Daten aus einer Analyse der Verzahnmaschine vergleichbar, so dass es aufwändig ist, Korrelationen zwischen den Ergebnissen der Wälzprüfung und den Daten der Maschinenanalyse zu ermitteln.

Vor diesem Hintergrund liegt der vorliegenden Erfindung die technische Problemstellung zugrunde, ein Verfahren anzugeben, das einen effizienten Abgleich zwischen Ergebnissen der Wälzprüfung und Daten aus einer Analyse der Verzahnmaschine ermöglicht.

Die voranstehend beschriebene, technische Problemstellung wird mit den Merkmalen unabhängigen Anspruchs gelöst. Weitere Ausgestaltungen der Erfindung ergeben sich aus den abhängigen Ansprüchen und der nachstehenden Beschreibung.

Gemäß einem ersten Aspekt betrifft die Erfindung Verfahren, mit den Verfahrensschritten: Bearbeitung einer Verzahnung eines Bauteils mittels einer Verzahnmaschine, wobei während der Bearbeitung der Verzahnung Achsdaten mindestens einer Maschinenachse der Verzahnmaschine, wie ein Achsvorschub, eine Achsbeschleunigung, eine Leistungsaufnahme eines Achsantriebs oder dergleichen, erfasst werden und/oder wobei während der Bearbeitung der Verzahnung Sensordaten mindestens eines Sensors der Verzahnmaschine, wie eines Körperschallsensors, eines Beschleunigungssensors, eines Abstandssensors oder dergleichen, erfasst werden; Bereitstellen der erfassten Achsdaten bezogen auf eine Umdrehung des Bauteils als umdrehungsbezogene Achsdaten und/oder Bereitstellen der erfassten Sensordaten bezogen auf eine Umdrehung des Bauteils als umdrehungsbezogene Sensordaten; Wälzprüfung des verzahnten Bauteils mittels eines Wälzprüfstands, wobei Messdaten der Wälzprüfung bezogen auf eine Umdrehung des Bauteils während der Wälzprüfung als umdrehungsbezogene Messdaten bereitgestellt werden; Abgleich der umdrehungsbezogenen Achsdaten und/oder der umdrehungsbezogenen Sensordaten mit den umdrehungsbezogenen Messdaten der Wälzprüfung, um Korrelationen zwischen Verzahnungsabweichungen gemäß der umdrehungsbezogenen Messdaten der Wälzprüfung und Maschinenabweichungen gemäß der umdrehungsbezogenen Achsdaten und/oder der umdrehungsbezogenen Sensordaten zu bestimmen.

Dadurch, dass sowohl die Messdaten der Wälzprüfung als auch die Achsdaten und/oder Sensordaten der Verzahnmaschine umdrehungsbezogen, d.h. bezogen auf eine jeweilige Bauteilumdrehung angegeben werden, kann unmittelbar nach Korrelationen gesucht werden. Auf diese Weise kann unmittelbar von im Rahmen der Wälzprüfung gemessenen Abweichungen auf Fehler oder Defekte der Verzahnmaschine geschlossen werden, wie fehlerhafte Achsen, Antriebe, Lager oder dergleichen.

Die Angabe der Achsdaten und/oder Sensordaten der Verzahnmaschine als auf eine Bauteilumdrehung bezogene Daten ermöglicht z.B. gegenüber dem im Stand der Technik bekannten reinen Zeitbezug dieser Daten einen vereinfachten Abgleich mit den Messdaten der Wälzprüfung.

Gemäß einer Ausgestaltung des Verfahrens kann vorgesehen sein, dass die umdrehungsbezogenen Achsdaten als Ordnungsspektrum bereitgestellt werden, insbesondere mittels FFT. Die Abkürzung FFT steht dabei in bekannter Weise für die schnelle Fourier-Transformation (eng. fast fourier transformation). Die Ordnungen sind dabei Vielfache der Drehzahl des Bauteils, so dass gemessene Abweichungen bzw. Messwerte als Amplituden über den einzelnen Ordnungen aufgetragen werden.

Gemäß einer Ausgestaltung des Verfahrens kann vorgesehen sein, dass die umdrehungsbezogenen Sensordaten als Ordnungsspektrum bereitgestellt werden, insbesondere mittels FFT. Die Abkürzung FFT steht dabei in bekannter Weise für die schnelle Fourier-Transformation (eng. fast fourier transformation). Die Ordnungen sind dabei Vielfache der Drehzahl des Bauteils, so dass gemessene Abweichungen bzw. Messwerte als Amplituden über den einzelnen Ordnungen aufgetragen werden.

Es kann vorgesehen sein, dass die umdrehungsbezogenen Ergebnisse der Wälzprüfung als Ordnungsspektrum bereitgestellt werden, insbesondere mittels FFT. Die Abkürzung FFT steht dabei in bekannter Weise für die schnelle Fourier-Transformation (eng. fast fourier transformation). Die Ordnungen sind dabei Vielfache der Drehzahl des Bauteils, so dass gemessene Abweichungen bzw. Messwerte als Amplituden über den einzelnen Ordnungen aufgetragen werden.

Ordnungen der Wälzprüfung können unmittelbar mit Ordnungen der Achsdaten und/oder Sensordaten der Verzahnmaschine verglichen werden. Treten z.B. für das Ordnungsspektrum der Wälzprüfung und für das Ordnungsspektrum der Achsdaten Auffälligkeiten z.B. der zweiten oder neunten Ordnung auf, so kann von einem unmittelbaren Zusammenhang zwischen der Abweichung der Achsdaten und der Abweichung der Wälzprüfung ausgegangen werden. Soweit der entsprechenden Ordnung der Achsdaten konkret eine Komponenten der Verzahnmaschine zugeordnet werden kann, kann durch eine Kalibrierung und/oder Wartung der betreffenden Komponente der Fehler in der Verzahnung für nachfolgend zu fertigende Verzahnungen reduziert bzw. eliminiert werden.

Beispielsweise kann vorgesehen sein, dass einer ersten Komponente der Verzahnmaschine, wie einem Lager, einem Antrieb oder dergleichen, mindestens eine Ordnung eines der Ordnungsspektren zugeordnet ist, und dass einer zweiten, von der ersten Komponente verschiedenen Komponente der Verzahnmaschine, wie einem Lager, einem Antrieb oder dergleichen, mindestens eine weitere Ordnung eines der Ordnungsspektren zugeordnet ist, wobei anhand einer Amplitude einer der Ordnungen ein Defekt der ersten Komponente und/oder der zweiten Komponente detektiert wird.

Komponenten der Verzahnmaschine werden während der Bearbeitung der Verzahnung zu Schwingungen angeregt, insbesondere im Bereich ihrer Eigenfrequenzen, wobei die Schwingungsanregung z.B. durch periodisch auftretende Bearbeitungskräfte und/der durch Verfahrbewegungen, d.h. Bewegungen und insbesondere Beschleunigungen der gesteuerten Maschinenachsen erfolgt. Hierbei treten häufig Schwingungen auf, die Vielfache einer Zahneingriffsfrequenz, einer Werkzeugspindeldrehzahl und/oder einer Werkstückspindeldrehzahl sind. Durch den erfindungsgemäßen Ansatz werden nunmehr insbesondere alle erfassten Schwingungen auf die Werkstück- bzw. Bauteilumdrehung bezogen angegeben, um einen unmittelbaren Vergleich mit Ergebnissen der Wälzprüfung zur ermöglichen.

Es kann vorgesehen sein, dass die Achsdaten und/oder Sensordaten bereits während deren Erfassung als auf die Bauteilumdrehung bezogene Daten aufgezeichnet bzw. gespeichert werden. Alternativ kann vorgesehen sein, dass Achsdaten und/oder Sensordaten mit z.B. mit einem Zeitbezug oder bezogen auf eine Werkzeugumdrehung aufgezeichnet bzw. gespeichert werden und anschließend als auf die Bauteilumdrehung bezogene Daten transformiert werden. Die Transformation kann insbesondere automatisiert und rechnergestützt erfolgen. Die Transformation kann nach einer Mittelung der Daten erfolgen.

Gemäß einer Ausgestaltung des Verfahrens kann vorgesehen sein, dass eine Mittelung Achsdaten erfolgt, wobei insbesondere eine Mittelung je Bauteilumdrehung erfolgt. Alternativ oder ergänzend kann vorgesehen sein, dass eine Mittelung Sensordaten erfolgt, wobei insbesondere eine Mittelung je Bauteilumdrehung erfolgt.

Als Sensor zur Erfassung von Sensordaten kann ein Beschleunigungssensor vorgesehen sein, der einer Werkstückspindel der Verzahnmaschine zugeordnet ist, wobei insbesondere zeitgleich zur Aufzeichnung von Sensordaten des Beschleunigungssensors die rotatorischen Positionen der Werkstückspindel erfasst werden. Die rotatorischen Positionen sind dabei Winkelpositionen der Werkstückspindel, die das Bauteil während der Bearbeitung trägt. Durch simultane Erfassung der rotatorischen Positionen der Werkstückspindel können die Sensordaten des Beschleunigungssensors als auf die Werkstückspindelumdrehung bezogene Daten gespeichert werden. Die Messwerte des Beschleunigungssensors können je Werkstückspindelumdrehung gemittelt werden.

Gemäß einer Ausgestaltung des Verfahrens kann vorgesehen sein, dass eine Stromaufnahme einer Werkzeugspindel, z.B. einer Schleifspindel, als Achsdaten erfasst wird. Wiederum können während der Aufzeichnung der Stromaufnahme der Werkzeugspindel zeitgleich die rotatorischen Positionen der Werkstückspindel erfasst wird, um die Stromaufnahme bezogen auf eine Werkstückspindelumdrehung erfassen werden. Die Messwerte der Stromaufnahme können je Werkstückspindelumdrehung gemittelt werden. Insbesondere können periodische Schwankungen in der Stromaufnahme der Werkstückspindel mit gemessenen Abweichungen der Wälzprüfung korreliert werden.

Nachfolgend wird die Erfindung anhand einer Ausführungsbeispiele darstellenden Zeichnung näher beschrieben. Es zeigen jeweils schematisch:
- Fig. 1: eine Verzahnungsschleifmaschine;
- Fig. 2: eine Schleifspindel mit einem zu schleifenden verzahnten Bauteil
- Fig. 3: einen Prüfstand zur Einflankenwälzprüfung;
- Fig. 4: ein Ergebnis einer Wälzprüfung;
- Fig. 5: einen Prüfstand zur Zweiflankenwälzprüfung;
- Fig. 6: Ordnungsspektren der Wälzprüfung, von Achsdaten und von Sensordaten;

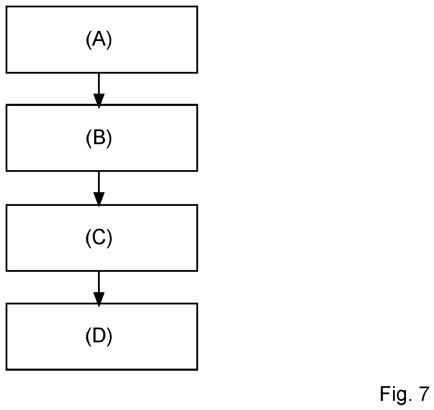

- Fig. 7: einen Ablaufplan eines erfindungsgemäßen Verfahrens.

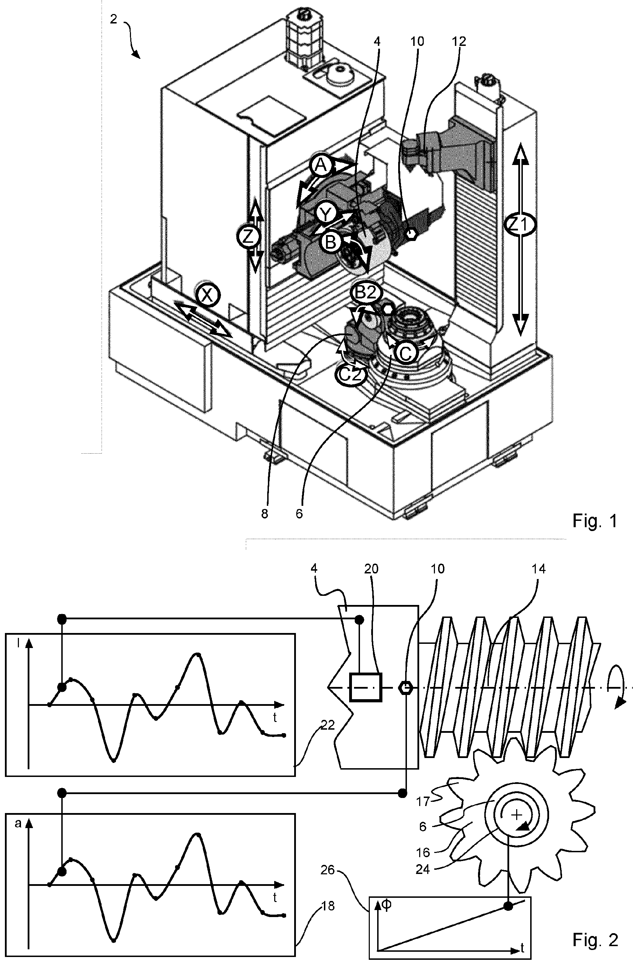

Fig. 1 zeigt eine Verzahnmaschine - und zwar eine Verzahnungsschleifmaschine 2. Die Verzahnungsschleifmaschine 2 hat eine Werkzeugspindel 4 zum Halten und Drehantreiben eines Schleifwerkzeugs. Die Verzahnungsschleifmaschine 2 hat eine Werkstückspindel 6 zum Halten und Drehantreiben eines zu schleifenden verzahnten Bauteils. Die Verzahnungsschleifmaschine hat eine Abrichtvorrichtung 8 zum Abrichten von Schleifwerkzeugen.

Der Werkzeugspindel 4, die auch als Schleifwerkzeugspindel bezeichnet werden kann, ist ein Beschleunigungssensor 14 zum Erfassen von Sensordaten zugeordnet.

Die Verzahnungsschleifmaschine 2 hat numerisch gesteuerte Maschinenachsen X, Y, Z, A, B, C, C2, B2 zum Ausführen von translatorischen und rotatorischen Relativbewegungen, um beim Verzahnen oder Abrichten die geforderte Bearbeitungskinematik bereitzustellen. Weiter hat die Verzahnungsschleifmaschine 2 eine Achse Z1 mit einer verschiebbaren Pinole 12 zum Spannen von Wellen oder Spanndornen.

Fig. 2 zeigt exemplarisch und schematisch die Werkzeugspindel 4 mit einer daran gehaltenen abrichtbaren Schleifschnecke 14 sowie die Werkstückspindel 6 mit einem daran gehaltenen zu schleifenden, verzahnten Bauteil 16, dessen Verzahnung 17 geschliffen wird.

Während der schleifenden Bearbeitung werden Sensordaten 18 des Beschleunigungssensors 10 als Zeitsignal einer Beschleunigung a über der Zeit t erfasst. Weiter werden während der schleifenden Bearbeitung Achsdaten 22 in Form einer Stromaufnahme I eines Motors 20 zum Drehantreiben der Werkstückspindel 4 als Zeitsignal einer Stromaufnahme I über der Zeit t erfasst. Die schematisch gezeigten Verläufe sind keine realen Messdaten und lediglich als Platzhalter zu verstehen.

Zudem werden, zeitgleich zu den Sensordaten 18 und Achsdaten 22, während der schleifenden Bearbeitung Winkelpositionen der Werkstückspindel 6 mittels eines Drehgebers 24 als weitere Achsdaten 26 erfasst - und zwar als Drehwinkel φ über der Zeit t.

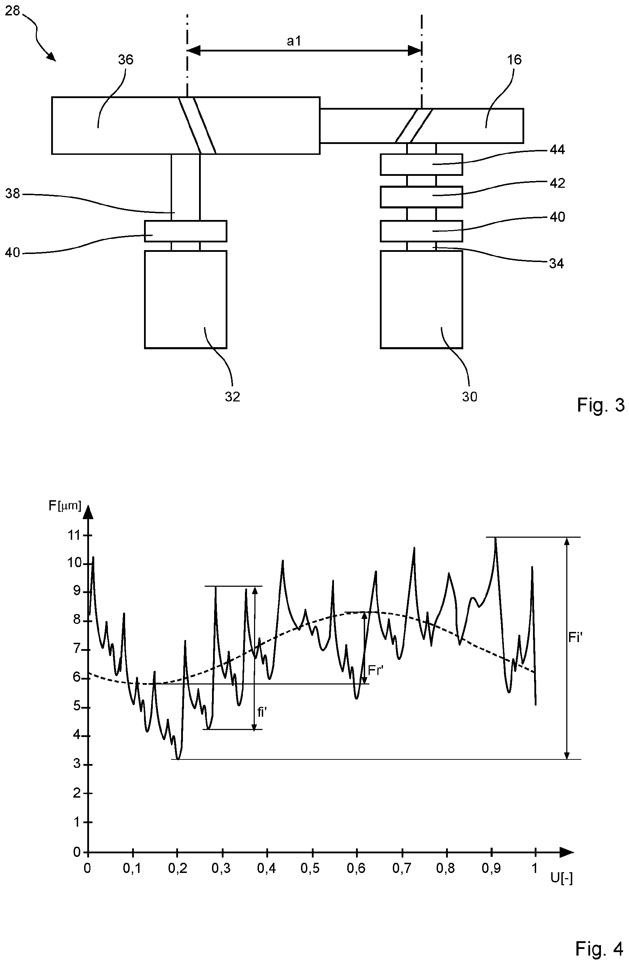

Fig. 3 zeigt exemplarisch den schematischen Aufbau eines Prüfstands 28 zur Durchführung einer Einflankenwälzprüfung für ein jeweiliges verzahntes Bauteils 16.

Der Prüfstand 28 hat einen ersten Antrieb 30 und einen zweiten Antrieb 32. Der erste Antrieb 30 ist zum Antreiben einer ersten Welle 34 eingerichtet, auf der das zu prüfende verzahnte Bauteil 16 montiert ist.

Der zweite Antrieb 32 dient zum Abbremsen eines Gegenrads 36, das auf einer mit dem Antrieb 20 gekoppelten zweiten Welle 26 montiert ist.

Das Gegenrad 36 ist ein außenverzahntes Stirnrad, das mit der Verzahnung des Bauteils 16 im Eingriff ist. Durch das Antreiben des verzahnten Bauteils 16 und das gleichzeitige Abbremsen des Gegenrads 36 lassen sich eine Drehzahl und ein Drehmoment während des Prüflaufs einstellen. Es versteht sich, dass auch Drehzahl- und Drehmomentverläufe einstellbar sind. Ein Achsabstand a1 zwischen den Wellen 38, 34 ist konstant.

Der Prüfstand 16 weist Drehgeber bzw. Winkelmesssysteme 40, einen Drehbeschleunigungsaufnehmer 42, sowie einen Körperschallsensor 44 auf.

Fig. 4 zeigt exemplarisch und schematisch den gemessenen Drehfehler F in [µm] aufgetragen über einer Umdrehung U des Zahnrads 16 - d.h. ein Ergebnis der Einflankenwälzprüfung eines einzelnen verzahnten Bauteils 16. Hieraus lassen sich in bekannter Weise z.B. Werte für den Rundlauffehler erster Ordnung Fr', die Zahn-zu-Zahn Amplitude fi` und die maximale Wälzabweichung Fi' bestimmen.

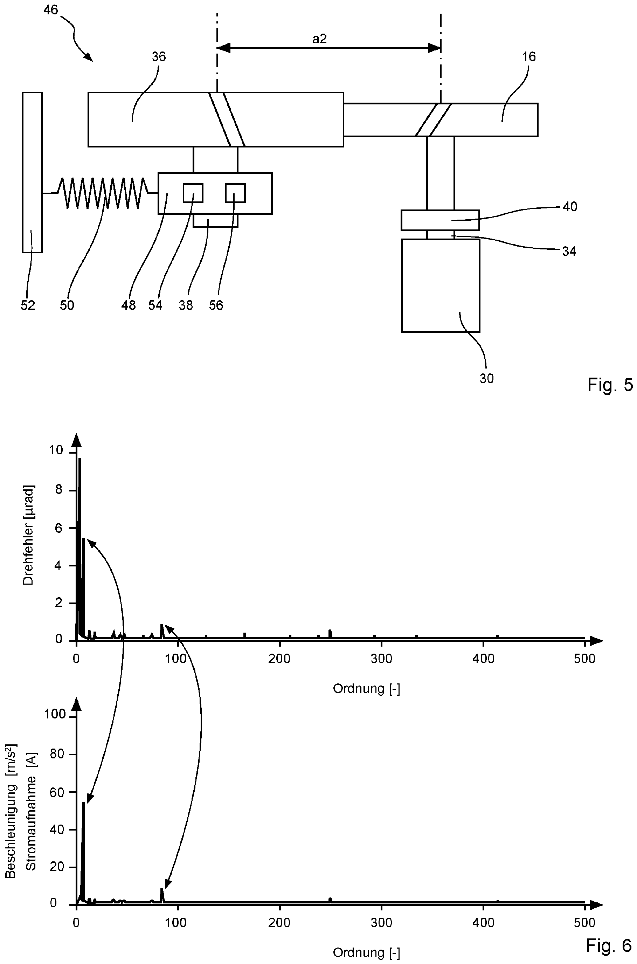

Alternativ oder ergänzend kann eine Zweiflankenwälzprüfung durchgeführt werden. Ein Prüfstand 46 zur Zweiflankenwälzprüfung ist exemplarisch und schematisch in Fig. 5 gezeigt. Zur Vermeidung von Wiederholungen werden nachfolgend gleichen Merkmalen die gleichen Bezugszeichen zugeordnet.

Die Zweiflankenwälzprüfung unterscheidet sich im Wesentlichen dadurch von der zuvor mit Bezug zu Fig. 3 beschriebenen Einflankenwälzprüfung, dass ein Achsabstand a2 während der Prüfung nicht konstant ist. Das Gegenrad 36 ist mit seiner Welle 38 an einem verfahrbaren Schlitten 48 montiert und gelagert. Der verfahrbare Schlitten 48 ist mittels einer Federeinrichtung 50 an einem unbeweglichen Gegenhalter 52 abgestützt.

Mittels der Federeinrichtung 50 wird das Gegenrad 36 in den Zahnkontakt zur zu prüfenden Verzahnung des Bauteils 16 gedrückt, wobei im Zahnkontakt eine beidseitige Kontaktierung sowohl der Rechts- als auch der Linksflanken der zu prüfenden Verzahnung des Bauteils 16 vorliegt.

Während der Prüfung, d.h. während des Abwälzens des verzahnten Bauteils 16 mit dem Gegenrad 36, wird das Gegenrad 36 mit einer definierten Kraft in Richtung des Bauteils 16 gedrückt.

Die Abweichung werden anhand einer translatorischen Verlagerung des verfahrbaren Schlittens 34 erfasst, wobei dem Schlitten 48 ein Wegaufnehmer 54 und ein Schwingungsaufnehmer 56 zugeordnet sind, um Messdaten aufzunehmen. Ergebnisse der Zweiflankenwälzprüfung sind beispielsweise die Wälz-Rundlaufabweichung, die Zweiflankenwälzabweichung und der Zweiflankenwälzsprung.

Fig 6 zeigt im oberen Teil exemplarisch und schematisch ein Ordnungsspektrum, das aus dem gemessenen Drehfehler gemäß Fig 4 bestimmt worden. Es gilt wiederum, dass es sich hierbei nur um schematische Darstellungen und keine realen Messwerte handelt. Die Ordnungen entsprechen Vielfachen der Drehzahl des Bauteils während der Wälzprüfung.

Im unteren Teil von Fig. 6 ist exemplarisch und schematisch ein Ordnungsspektrum gezeigt, dass aus den Achsdaten oder Sensordaten gemäß Fig. 3 erzeugt worden ist. Dementsprechend ist in der beispielhaften Darstellung die y-Achse sowohl mit "Beschleunigung" als auch mit "Stromaufnahme" bezeichnet.

Durch einen Vergleich dominanter Ordnung kann eine Zuordnung von Fehlern oder Abweichungen der Verzahnmaschine zu gemessenen Abweichungen des verzahnten Bauteils erfolgen. So z.B. erkannt werden, dass ein Lagerschaden oder ein Lagerverschleiß der Werkzeugspindel der Verzahnmaschine unmittelbar zu einem messbaren Drehfehler z.B. der zweiten Ordnung des verzahnten Bauteils führt. Dadurch, dass sowohl die Ergebnisse der Wälzprüfung als auch die Achsdaten und/oder Messdaten jeweils bezogen auf die Bauteilumdrehung angegeben werden, können in einfacher Weise unmittelbar Korrelationen zwischen Verzahnungsabweichungen und Maschinenabweichungen erkannt werden.

Es kann daher erfindungsgemäß ein Verfahren angegeben werden, mit den Verfahrensschritten:
(A) Bearbeitung der Verzahnung eines Bauteils 16 mittels der Verzahnmaschine 2, wobei während der Bearbeitung der Verzahnung Achsdaten 22, 26 der Maschinenachsen 4 und 6 der Verzahnmaschine 2 erfasst werden und wobei während der Bearbeitung der Verzahnung Sensordaten 18 mindestens des Sensors 10 der Verzahnmaschine 2, erfasst werden;
(B) Bereitstellen der erfassten Achsdaten 22, 26 bezogen auf eine Umdrehung des Bauteils 16 als umdrehungsbezogene Achsdaten 22, 26 und Bereitstellen der erfassten Sensordaten 18 bezogen auf eine Umdrehung des Bauteils 16 als umdrehungsbezogene Sensordaten, wobei die umdrehungsbezogenen Achsdaten mittels FFT als Ordnungsspektrum bereitgestellt werden und die umdrehungsbezogenen Sensordaten mittels FFT als Ordnungsspektrum bereitgestellt werden;
(C) Wälzprüfung des verzahnten Bauteils mittels eines Wälzprüfstands, wobei Messdaten der Wälzprüfung bezogen auf eine Umdrehung des Bauteils während der Wälzprüfung als umdrehungsbezogene Messdaten bereitgestellt werden, wobei die umdrehungsbezogenen Ergebnisse der Wälzprüfung mittels FFT als Ordnungsspektrum bereitgestellt werden;
(D) Abgleich der umdrehungsbezogenen Achsdaten und der umdrehungsbezogenen Sensordaten mit den umdrehungsbezogenen Messdaten der Wälzprüfung, um Korrelationen zwischen Verzahnungsabweichungen gemäß der umdrehungsbezogenen Messdaten der Wälzprüfung und Maschinenabweichungen gemäß der umdrehungsbezogenen Achsdaten und der umdrehungsbezogenen Sensordaten zu bestimmen.

### BEZUGSZEICHEN

- 2: Verzahnmaschine
- 4: Werkzeugspindel
- 6: Werkstückspindel
- 8: Abrichtvorrichtung
- 10: Beschleunigungssensor
- 12: Pinole
- 14: Schleifschnecke
- 16: Bauteil
- 17: Verzahnung
- 18: Sensordaten
- 20: Antrieb
- 22: Achsdaten
- 24: Drehgeber
- 26: Achsdaten
- 28: Prüfstand zur Einflankenwälzprüfung
- 30: Antrieb
- 32: Antrieb
- 34: Welle
- 36: Gegenrad
- 38: Welle
- 40: Winkelmesssystem
- 42: Drehbeschleunigungsaufnehmer
- 44: Körperschallsensor
- 46: Prüfstand zur Zweiflankenwälzprüfung
- 48: Schlitten
- 50: Federeinrichtung
- 52: Gegenhalter
- 54: Wegaufnehmer
- 56: Schwingungsaufnehmer

## Patentansprüche

1. Verfahren, mit den Verfahrensschritten:
- Bearbeitung einer Verzahnung (17) eines Bauteils (16) mittels einer Verzahnmaschine (2), wobei während der Bearbeitung der Verzahnung (17) Achsdaten (22, 26) mindestens einer Maschinenachse (4, 6) der Verzahnmaschine (2), wie ein Achsvorschub, eine Achsbeschleunigung, eine Leistungsaufnahme eines Achsantriebs oder dergleichen, erfasst werden und/oder wobei während der Bearbeitung der Verzahnung (17) Sensordaten (18) mindestens eines Sensors (10) der Verzahnmaschine (2), wie eines Körperschallsensors, eines Beschleunigungssensors, eines Abstandssensors oder dergleichen, erfasst werden;
- Bereitstellen der erfassten Achsdaten (22, 26) bezogen auf eine Umdrehung des Bauteils (16) als umdrehungsbezogene Achsdaten und/oder Bereitstellen der erfassten Sensordaten (18) bezogen auf eine Umdrehung des Bauteils (16) als umdrehungsbezogene Sensordaten;
- Wälzprüfung des verzahnten Bauteils (16) mittels eines Wälzprüfstands (3, 5), wobei Messdaten der Wälzprüfung bezogen auf eine Umdrehung des Bauteils (16) während der Wälzprüfung als umdrehungsbezogene Messdaten bereitgestellt werden;
- Abgleich der umdrehungsbezogenen Achsdaten (22, 26) und/oder der umdrehungsbezogenen Sensordaten (18) mit den umdrehungsbezogenen Messdaten der Wälzprüfung, um Korrelationen zwischen Verzahnungsabweichungen gemäß der umdrehungsbezogenen Messdaten der Wälzprüfung und Maschinenabweichungen gemäß der umdrehungsbezogenen Achsdaten und/oder der umdrehungsbezogenen Sensordaten zu bestimmen.

2. Verfahren nach Anspruch 1,
**dadurch gekennzeichnet, dass**
die umdrehungsbezogenen Achsdaten als Ordnungsspektrum bereitgestellt werden, insbesondere mittels FFT
und/oder
die umdrehungsbezogenen Sensordaten als Ordnungsspektrum bereitgestellt werden, insbesondere mittels FFT.

3. Verfahren einem der voranstehenden Ansprüche,
**dadurch gekennzeichnet, dass**
dass die umdrehungsbezogenen Ergebnisse der Wälzprüfung als Ordnungsspektrum bereitgestellt werden, insbesondere mittels FFT.

4. Verfahren einem der voranstehenden Ansprüche 2 oder 3,
**dadurch gekennzeichnet, dass**
einer ersten Komponente der Verzahnmaschine, wie einem Lager, einem Antrieb oder dergleichen, mindestens eine Ordnung eines der Ordnungsspektren zugeordnet ist, und dass einer zweiten, von der ersten Komponente verschiedenen Komponente der Verzahnmaschine, wie einem Lager, einem Antrieb oder dergleichen, mindestens eine weitere Ordnung eines der Ordnungsspektren zugeordnet ist, wobei anhand einer Amplitude einer der Ordnungen ein Defekt der ersten Komponente und/oder der zweiten Komponente detektiert wird.

5. Verfahren einem der voranstehenden Ansprüche,
**dadurch gekennzeichnet, dass**
eine Mittelung der Achsdaten erfolgt, wobei insbesondere eine Mittelung je Bauteilumdrehung erfolgt
und/oder
eine Mittelung der Sensordaten erfolgt, wobei insbesondere eine Mittelung je Bauteilumdrehung erfolgt.

6. Verfahren einem der voranstehenden Ansprüche,
**dadurch gekennzeichnet, dass**
als Sensor (10) zur Erfassung von Sensordaten (18) ein Beschleunigungssensor (10) vorgesehen ist, der einer Werkzeugspindel (4) der Verzahnmaschine (2) zugeordnet ist, wobei insbesondere zeitgleich zur Aufzeichnung von Sensordaten des Beschleunigungssensors die rotatorischen Positionen der Werkstückspindel (6) erfasst werden.

7. Verfahren einem der voranstehenden Ansprüche,
**dadurch gekennzeichnet, dass**
dass eine Stromaufnahme einer Werkzeugspindel (4) als Achsdaten erfasst wird, wobei insbesondere zeitgleich zur Aufzeichnung der Stromaufnahme der Werkzeugspindel (4) die rotatorischen Positionen der Werkstückspindel (6) erfasst werden.
